(19) **Europäisches Patentamt / European Patent Office / Office européen des brevets**

(11) **EP 3 746 808 B1**

(12) **EUROPEAN PATENT SPECIFICATION**

(45) Date of publication and mention of the grant of the patent:
**12.03.2025  Bulletin 2025/11**

(51) International Patent Classification (IPC):
**G01S 13/89** (2006.01)    **G01S 13/90** (2006.01)
**G01S 7/40** (2006.01)

(21) Application number: **19704404.3**

(52) Cooperative Patent Classification (CPC):
**G01S 13/89; G01S 7/40; G01S 13/9027**

(22) Date of filing: **30.01.2019**

(86) International application number:
**PCT/GB2019/050258**

(87) International publication number:
**WO 2019/150107 (08.08.2019 Gazette 2019/32)**

(54) **RADAR IMAGE PROCESSING**

RADARBILDVERARBEITUNG

TRAITEMENT D'IMAGE RADAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2018  GB 201801613**

(43) Date of publication of application:
**09.12.2020  Bulletin 2020/50**

(73) Proprietor: **National Oceanography Centre Southhampton SO14 3ZH (GB)**

(72) Inventor: **MCCANN, David**
**Liverpool, Merseyside L3 5DA (GB)**

(74) Representative: **Barker Brettell LLP**
**100 Hagley Road**
**Edgbaston**
**Birmingham B16 8QQ (GB)**

(56) References cited:
**US-A1- 2004 257 264      US-A1- 2012 020 527**
**US-A1- 2016 349 363      US-A1- 2017 176 586**

**Description**

The present disclosure relates to methods and systems for radar image processing. In particular, the disclosure relates to methods and systems for radar image processing in radar remote sensing of a surface of a body of water such as an ocean or sea. More particularly, the disclosure relates to methods and systems for radar image processing in ship-borne radar remote sensing of a surface of a body of water such as an ocean or sea.

US 2004/257264 discloses an oil spill identification system and oil spill identification sensors to be used in connection with this system. The system is used primarily on fixed offshore structures but may also be used on fixed onshore constructions. The sensor comprises a combination of a radar and at least a microwave radiometer.

US 2016/349363 discloses a radar imaging system and technique which generates an image and transforms the image into world coordinates taking into account host position and heading. Once in world coordinates, successive radar images can be summed to produce an integrated image.

US 2012/020527 discloses systems and methods for acquiring accurate maps of near-shore depth and surface currents. An imaging platform is provided which is able to obtain a time series of overhead images of an area of a body of water having pixel intensity correlated with wave height. Image processing corrects the images, as and if needed, such that they are mapped onto a grid of fixed coordinates, and the pixel intensities have a near linear relationship to wave height. A pixel-by-pixel map of depths and/or currents can be produced.

US 2017/176586 discloses systems and methods to provide orientation and/or position data from an orientation and/or position sensor (OPS) while it is rotating. A system includes a logic device configured to communicate with an OPS that is rotationally coupled to a mobile structure. The logic device is configured to receive orientation and/or position data from the OPS while the OPS is rotating relative to the mobile structure and determine rotationally corrected orientation and/or position data referenced to the mobile structure, a rotationally actuated sensor assembly mounted to the mobile structure, and/or an absolute coordinate frame.

A first aspect provides a method of remote sensing of a body of water as defined in claim 1.

The method may be carried out on a computer. The method may be a computerized method.

The radar intensity images and/or the time-integrated images may include a portion of land adjacent the body of water. The portion of land adjacent the body of water may comprise for example a shoreline, a beach, a marsh. The portion of land adjacent the body of water may have thereon one or more buildings or other structures.

The radar apparatus may be operable to obtain x-band radar intensity images.

The navigation unit may be operable to record accurate positional and heading data, typically at high temporal resolution. The navigation unit may comprise a Global Navigation Satellite System (GNSS) and/or an Inertial Navigation System (INS).

Each of the plurality of radar intensity images is converted into a geographically-referenced image using position and heading data recorded by the navigation unit. The or each geographically-referenced image may be a Cartesian co-ordinate image. Converting the radar intensity image(s) to the geographically-referenced image(s) may be performed using a bilinear interpolation.

A synthetic aperture image may be constructed from a number of sequential geographically-referenced radar intensity images, e.g. so that:

$$I = \left[\sum_{S=1}^{S=n} p(S_c)\right] \frac{1}{n} \tag{1}$$

where p is the intensity of each pixel in scan $S_c$. I is therefore a time-integrated image of a set of n geographically-referenced radar intensity images.

The visual sharpness F of image I may be determined by the stability of static targets over the number of geographically-referenced radar intensity images and can be defined as the variance of the two-dimensional image gradient so that:

$$F = Var\left(\frac{dp(I)}{dx} + \frac{dp(I)}{dy}\right) \tag{2}$$

The sharpness F may therefore be maximised when the variance of gradients across static targets is maximised. This occurs in a visually sharp image as transient targets (e.g., sea clutter) will average out over n geographically-referenced radar intensity images to give a low pixel intensity whereas static targets will produce a high pixel intensity that in a sharp image has well defined edges. Therefore in a sharp time-integrated image the number of well-defined edges is low compared to the number of poorly defined edges (from sea clutter), producing a high F value.

The method may maximise F by applying one of more, e.g. all three, of the calibration offsets and generating image I through an efficient search path.

The method may assume that the three principal systematic calibration offsets are not covariant and have an order of relative importance to image stability, for instance: angle $\alpha$, range $\beta$ and time $\gamma$.

Applying the principal systematic calibration offsets begins in a first pass with all three offsets initially set to equal zero, conducting a search for an optimum value of a first calibration offset, e.g. $\alpha$, and then, optionally, using this offset value (with the other two calibration offsets initially set to zero) in a second pass to search for an optimum value of a second offset, e.g. $\beta$. The steps may then be repeated in a third pass to find a third offset, e.g. $\gamma$, using the previously-found values for the first and second offsets and $\gamma$ initially set to zero. In this way, the maximum image sharpness $F_{max}$ should increase over each of the three passes in the program, with the maximum possible value of $F_{max}$ found when all three offsets have been optimally determined.

The vessel may comprise for example a ship, a boat, a raft, a hovercraft.

The body of water may comprise for example an ocean, a sea, a lake, a river, an estuary, a delta, a reservoir, a canal.

Surveying the surface of the body of water may comprise manoeuvring the vessel and, optionally, one or more further vessels, across at least a portion of the body of water.

A second aspect provides a system for remote sensing of a body of water as defined in claim 13.

The computer may be configured to perform a method of the first aspect.

The radar intensity images and/or the time-integrated images may include a portion of land adjacent the body of water. The portion of land adjacent the body of water may comprise for example a shoreline, a beach, a marsh. The portion of land adjacent the body of water may have thereon one or more buildings or other structures.

The radar apparatus may be operable to obtain x-band radar intensity images.

The navigation unit may be operable to record accurate positional and heading data, typically at high temporal resolution. The navigation unit may comprise a Global Navigation Satellite System (GNSS) and/or an Inertial Navigation System (INS).

The computer is configured to convert each of the plurality of radar intensity images into a geographically-referenced image using position and heading data recorded by the navigation unit. The or each geographically-referenced image may be a Cartesian co-ordinate image. Converting the radar intensity image(s) to the geographically-referenced image(s) may be performed using a bilinear interpolation.

The computer may be configured to construct a synthetic aperture image from a number of sequential geographically-referenced radar intensity images, e.g. so that:

$$I = \left[\sum_{S=1}^{S=n} p(S_c)\right]\frac{1}{n} \qquad (1)$$

where p is the intensity of each pixel in scan $S_c$. I is therefore a time-integrated image of a set of n geographically-referenced radar intensity images.

The visual sharpness F of image I may be determined by the stability of static targets over the number of geographically-referenced radar intensity images and can be defined as the variance of the two-dimensional image gradient so that:

$$F = Var\left(\frac{dp(I)}{dx} + \frac{dp(I)}{dy}\right) \qquad (2)$$

The sharpness F may therefore be maximised when the variance of gradients across static targets is maximised. This occurs in a visually sharp image as transient targets (e.g., sea clutter) will average out over n geographically-referenced radar intensity images to give a low pixel intensity whereas static targets will produce a high pixel intensity that in a sharp image has well defined edges. Therefore in a sharp time-integrated image the number of well-defined edges is low compared to the number of poorly defined edges (from sea clutter), producing a high F value.

The computer may be configured to maximise F by applying one of more, e.g. all three, of the calibration offsets and generating image I through an efficient search path.

The computer may be configured to assume that the three principal systematic calibration offsets are not covariant and have an order of relative importance to image stability, for instance: angle $\alpha$, range $\beta$ and time $\gamma$.

Applying the principal systematic calibration offsets begins in a first pass with all three offsets initially set to equal zero, conducting a search for an optimum value of a first calibration offset, e.g. $\alpha$, and then, optionally, using this offset value (with the other two calibration offsets initially set to zero) in a second pass to search for an optimum value of a second offset, e.g. $\beta$. The steps may then be repeated in a third pass to find a third offset, e.g. $\gamma$, using the previously-found values for the first and second offsets and $\gamma$ initially set to zero. In this way, the maximum image sharpness $F_{max}$ should increase over each of the three passes in the program, with the maximum possible value of $F_{max}$ found when all three offsets have been optimally determined.

The vessel may comprise for example a ship, a boat, a raft, a hovercraft.

The body of water may comprise for example an ocean, a sea, a lake, a river, an estuary, a delta, a reservoir, a canal.

A third aspect provides a computer readable medium comprising software as defined in claim 15.

The software may configure the computer to perform a method according to the first aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:

Figures 1, 2 and 3 illustrate variation in the total image sharpness F for the angular $\alpha$ (Figure 1), range $\beta$ (Figure 2) and time $\gamma$ (Figure 3) offsets. In each Figure, the maximum F value is denoted by the dotted black line and its value is shown.

Figures 4, 5, 6 and 7 show time-integrated images and their associated F values generated during the calibration process using data recorded as the Discovery sailed through the Solent, centred on an area around Fawley oil refinery. Figure 4 shows the effect of all offsets set to zero, Figure 5 a correct value for $\alpha$ only, Figure 6 a correct value of $\alpha$ and $\beta$ and Figure 7 correct values for all three offsets.

Figures 8, 9, 10 and 11 show time-integrated images and their associated F values generated during the calibration process using data recorded as the Discovery sailed through the Solent, centred on an area around Hythe marina. Figure 8 shows the effect of all offsets set to zero, Figure 9 a correct value for $\alpha$ only, Figure 10 a correct value of $\alpha$ and $\beta$ and Figure 11 correct values for all three offsets.

Figure 12 shows a "synthetic aperture" time-integrated image at 5m pixel resolution created by the described calibration method.

Figure 13 shows another "synthetic aperture" time-integrated image created by the described calibration method.

This disclosure may provide a simple offset "calibration" method for the accurate geographic registration of ship-borne X-band radar intensity imagery

X-band radar remote sensing of the ocean surface using ground-based installations and radar intensity imagery is a mature technology for the determination of ocean wave properties. In order to transition the analytical methods to data collected from a moving vessel the accurate geo-registration of radar images must be performed. However, finite offsets in azimuth, range and time are generated by the physical installation of equipment aboard a vessel that may not be measurable. This work details a simple, yet robust method to 'calibrate' data recorded by an arbitrary equipment installation to allow accurate geo-registration of the radar imagery. Time-integrated radar images are generated using a set of time-stamped radar intensity images and high-frequency, high-accuracy vessel heading and position information (from global satellite navigation systems and inertial navigation systems). The time-integrated image sharpness is found to be maximal for correctly determined angular, range and time offsets. An operational system for practising the method is also discussed.

Ground-based X-band radar using intensity imagery is an established tool for the remote sensing of the sea surface through primary determination of ocean wave spectra ( [1], [2], [3]) and utilizing this spectral information to determine bathymetry through wave-inversion techniques ( [4], [5], [6]) and near-surface currents through the Doppler shift of directional wave spectra [6]. Wave-inversion has been demonstrated to work with radar data recorded from a moving vessel for the determination of bathymetry [7] and surface currents [8] as well as estimates of surface elevation [9] and wind fields [10]. The capabilities of shore based radars for depth and current mapping are well documented, but these systems are inherently limited to line of sight and limited range, usually of the order of 4km. If the same methods can be applied to data from moving vessels, there is potential for a single system to cover a vastly greater area and avoid the blind spots inherent in static systems. For example, if a pilot vessel, tug or port survey vessel were to be equipped with such a system, it could be returning almost continuous updates from entire port operation areas - perhaps monitoring the evolution of sandbanks adjacent to navigation channels. Such systems could also be used for rapid assessment of hurricane or typhoon damage in order to guide more detailed high resolution surveys by the limited resources of conventional survey boats.

A problem associated with transitioning ground-based radar techniques to shipborne use is the accurate frame-by-frame geographic registration of the digitised radar images. To achieve this, accurate (and frequent) position and heading data for the vessel must be obtained. It is common practice to use multi-antenna Global Navigation Satellite Systems (GNSS) and Inertial Navigation Systems (INS) to record accurate positional and heading data at high temporal resolution. However, the physical installation and mounting of such systems can introduce an unknown (i.e., not routinely or simply measured) angular offsets between the GPNSS/INS unit, radar transceiver and the vessel's true 'bow up' heading.

As the vessel moves in geographic space any recorded sea echoes must originate from consistent points in space; i.e., the movement of the vessel (horizontal motion or changes in heading) must not affect the recorded position of a sea echo between frames. This is a similar problem as is faced in Synthetic Aperture Radar (SAR) or Synthetic Aperture Sonar (SAS) signal processing. In order to generate a clear, high-contrast SAR or SAS image every recorded signal must be accurately and consistently geo-registered.

Three principal ('first order') systematic offsets are here identified that need to be known in order to accurately geo-register marine radar data using an accurate GNSS/INS system for positional and navigation data.

The azimuthal alignment error $\alpha$ (unit degrees): The angular offset between the heading of the GNSS navigation unit and the true heading. This is generated by the physical mounting of the GNSS unit in relation to the vessel's bow.

The start range error $\beta$ (unit m): The error in the distance from the antenna of the first range bin in the digitised data. This is generated by finite electrical transmission delays along the radar cable between the up-mast transceiver and the down-mast processing unit.

The system time error $\gamma$ (unit s): The total time delay generated by the communication of data between processing units, the analogue to digital converter (ADC) and any miscellaneous, computing-induced time delays between the true recording time and the image time-stamp. If using a personal computer (PC) to record and log the radar images and the PC is not connected to a system time correction server (e.g., via internet) then the most important component of the time error may be an incorrect PC system time.

Correcting for these first-order offsets creates geo-registered radar imagery clear and stable enough to perform wave inversion techniques. There are a number of physical effects that can generate additional offsets that are neglected in this disclosure. These include:

The horizontal offset between the mounting of the radar transceiver and the GNSS navigation antenna. This could be of the order of tens of metres on a large vessel and would introduce a systematic offset between the radar image centre and the vessel's true position.

The pitch, roll and heave of a vessel will affect the true point of intersection between the radar beam and the ocean surface compared to the assumed 'flat' condition. This will result in an error in the geographic coordinates of each pixel and will be variable depending on pitch and roll angles, pixel azimuth and the position of the radar transceiver relative to the vessel's centre of mass/rotation. The error is expected to be small (especially for large vessels with reduced pitch and roll movements) but could become important for small craft.

Reference [8] calculated the alignment error $\alpha$ by adopting the calibration methods of [11] developed for ship-borne Acoustic Doppler Current Profiler (ADCP) measurements. The method requires the determination of radar-derived near-surface current components (via wave inversion techniques) during a period of vessel manoeuvring. The method has been shown to be highly effective, however individual estimates of $\alpha$ are dependent on accurate determination of near surface current vectors and therefore tend to be noisy [8], requiring averaging across a number of estimates. The requirement for the use of sea clutter wave inversion techniques also requires the presence of adequate sea clutter (and therefore wave height and wind speed). There are no published methods for determining the start range and system time errors $\beta$ and $\gamma$, leaving trial-and-error as the present solution for the determination of these parameters. For ground-based radar installations this trial-and-error approach may be satisfactory as it technically needs only to be performed once per installation. However for unknown vessel equipment installations and the potential for frequent equipment changes this approach will be prohibitively time consuming. Additionally, the accuracy of trial-and-error offset determination is dependent on the time applied to the problem. An automated, accurate method is therefore required.

As wave inversion using ground-based marine radar intensity imagery is a mature technology there remain significant opportunities expanding the approach to vessel-borne data. However a simple and robust approach is needed to derive these offsets that are critical for accurate image geo-registration. The method presented in this work for the determination of $\alpha$, $\beta$ and $\gamma$ avoids the need for physical parameters (such as wave spectra or surface current components) to be derived from radar intensity imagery, instead relying on accurate position and heading information (from GPS/INS) and a simple, yet robust, image processing technique. The robustness of the method lies in the SAR-type images that are generated as a result: clear, sharp, time-integrated images can only be generated if the geographic coordinates of each pixel in each recorded frame is accurate and stable as the vessel moves.

## Method

The new automated calibration algorithm is based on the concept that echoes from static targets (e.g., radar marker buoys, sea walls, land clutter from buildings, saltmarshes, etc.) must remain in the same position on a geo-referenced radar image even after an arbitrarily large number of sequential scans while the scanning origin (the radar) is both in motion and its reference azimuth (the heading of the vessel) is changing. As the vessel manoeuvres the position of the echoes become steadily less correct as the errors in geo-referencing are cumulative with the reference point in motion. This apparent motion of static targets can be minimised with prior knowledge of their origin. However, it is also possible to quantify their 'static-ness' using simple image processing techniques.

First, each digitised polar-coordinate (azimuth-range) image $S_p$ is converted into a geo-referenced Cartesian coordinate (e.g. OS Grid, UTM) image $S_c$ using high-resolution position and heading information, e.g., from a multi-antenna GNSS/INS system. In this case the Cartesian conversion is performed using a simple but robust bilinear interpolation. Next, a 'synthetic aperture' image I is constructed from an arbitrarily large number n of sequential Cartesian image scans $S_c$ so that:

$$I = \left[ \sum_{S=1}^{S=n} p(S_c) \right] \frac{1}{n} \qquad (1)$$

where p is the intensity of each pixel in scan $S_c$. I is therefore a time-integrated image of a set of n scans. The visual sharpness F of image I will be determined by the stability of static targets over the number of scans and can be defined as the variance of the two-dimensional image gradient so that:

$$F = Var\left( \frac{dp(I)}{dx} + \frac{dp(I)}{dy} \right) \qquad (2)$$

The sharpness F is therefore maximised when the variance of gradients across static targets is maximised. This occurs in a visually sharp image as transient targets (e.g., sea clutter) will average out over n scans to give a low pixel intensity whereas static targets will produce a high pixel intensity that in a sharp image has well defined edges. Therefore in a sharp time-integrated image the number of well-defined edges is low compared to the number of poorly defined edges (from sea clutter), producing a high F value.

The new calibration algorithm acts to maximise F by applying calibration offsets and generating image I through an efficient search path. The approach assumes that the three calibration offsets are not covariant and have an order of relative importance to image stability: Angle $\alpha$, range $\beta$ and time $\gamma$. There may be a degree of co-dependency between the angular and range offsets and their effect on F, although the effect is minimal and is discussed later. The program begins with all offsets initially set to equal zero, searches for an optimum value of $\alpha$ and then uses this offset value (with the other two initially set to zero) when gridding images $S_c$ for the second pass to search for the optimum value of $\beta$. This process is repeated for the final pass to find $\gamma$, with the previously found values for the other two offsets and $\gamma$ initially set to zero. In this way, the maximum image sharpness $F_{max}$ should increase over each of the three passes in the program, with the maximum possible value of $F_{max}$ found when all three offsets have been optimally determined.

In principle the calibration method requires an arbitrary number of intensity images containing static targets to function correctly. However the accuracy of the process to search for $F_{max}$ is weakly dependent on the number of images provided to the algorithm as well as the relative proportion of static targets to sea in the total gridded area. The implications of the quantity and quality of input data on offset determination are discussed in a later section.

To test the new calibration algorithm a sample radar intensity image dataset was selected, recorded by the Natural Environment Research Council (NERC) research vessel RSS Discovery upon leaving port in Southampton and travelling South-East through the Solent. The RSS Discovery is equipped with an incoherent 25kW Furuno X-band radar operating on short pulse (50ns) for scientific purposes (separate from the navigational radar), with the transceiver and 1.8m horizontally-polarised ('HH') antenna (providing a 3dB beamwidth of 1° in the horizontal and approximately 20° in the vertical) installed approximately 30m above the waterline on the ship's instrumentation tower. The raw radar intensity data were captured and digitised at 30MHz and 12bits by a WaMoS II (OceanWaves GmbH) radar computer and compressed to polar coordinate images with a pixel resolution of 0.3° in azimuth and 7.5m in range. The digitiser was set to record images out to 2km range with an antenna rotation rate of 2.4s (25 rpm) in records 64 images in length. 14 image records were selected providing a total of 896 images in the sample set. The bilinear, nearest-neighbour Cartesian image interpolation was performed to a 20m pixel size to perform the calibration routines and a 5m pixel size for imagery to visually inspect the results. A second dataset of 512 images recorded as the Discovery sailed through the Sound of Mull, Scotland, was also obtained to demonstrate the image stabilisation effect possible with correctly determined offset variables.

## Results

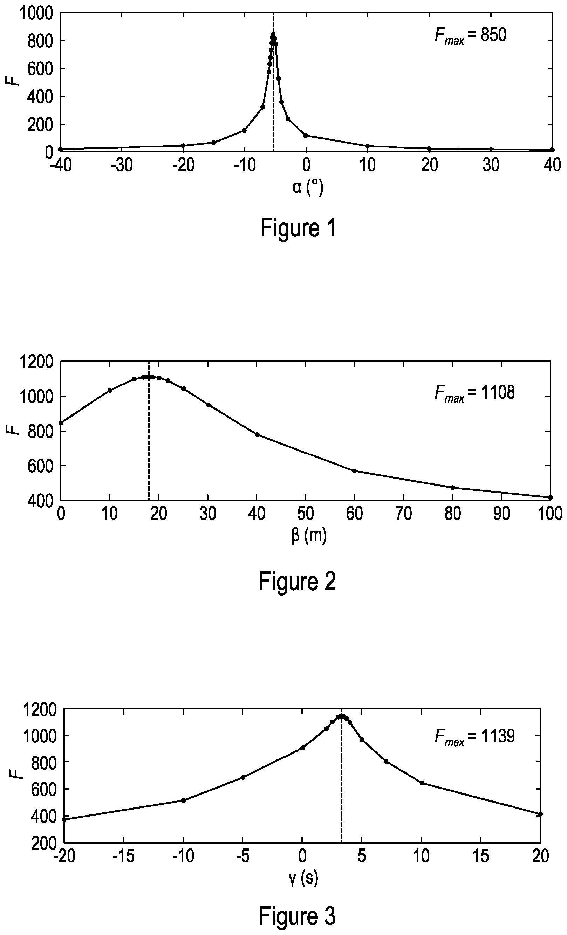

Figures 1, 2 and 3 show the output of the new calibration program from a test image dataset of the Solent and the port of Southampton with the order of the calculated offsets proceeding from Figure 1 to Figure 2 to Figure 3. In each of Figures 1, 2 and 3 the maximum sharpness $F_{max}$ is presented and is seen to increase between each calculated offset to a maximum value of $F_{max}$ = 1139 (see Figure 3) when all three offsets have been determined. The maximum sharpness $F_{max}$ in Figure 1 is 850. The maximum sharpness $F_{max}$ in Figure 3 is 1108. It can be noted that the increase in $F_{max}$ due to a correct value of $\gamma$ is less pronounced than for either of the other offsets. This is primarily due to the recorded motion of the vessel at the time the data was recorded; as the Discovery was performing little manoeuvring while sailing through the Solent (holding a steady course) the difference in true heading a few seconds either side of the true time is small. The primary manifestation of an incorrect value of $\gamma$ (and therefore an inaccurate time recorded in the radar file) is an error in position and heading, dependent on both the speed of the vessel and its rate of turn. A major component of $\gamma$ may be an incorrect system time if using a PC to record and log the radar imagery. From the inventor's experience this time error can be of the order of minutes; generating a significant error between the recorded time of image capture and the navigational data. The problem that leads to such large time delays is that being on a vessel the data-logging / processing computer may not have direct access to network time servers to keep the PC clock up-to-date (PC clocks are notorious for gradually drifting over time). Therefore the high frequency GNSS position fixes, if accessed from a separate file, may correspond to a radically different time to the time-stamp logged on the radar imagery. This is less of an issue if the GNSS positions, times, etc., are logged on the radar files themselves, but does not preclude networking delays in the ship's network delivering the information to the PC. If the PC is linked to a time standard one way or another, there are still likely to be differences of the order of up to a few seconds between the time that position fixes are logged and when the vessel was actually at the logged position; especially if the vessel is moving at speed. It is highly recommended that steps are taken to remove this particular time offset separately as large values for $\gamma$ will manifest as severe errors in vessel heading.

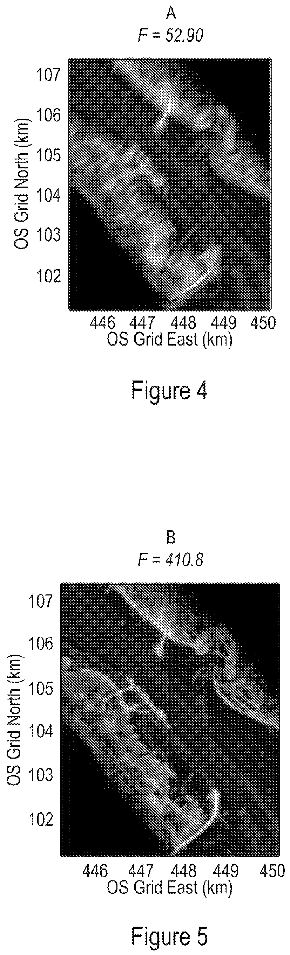

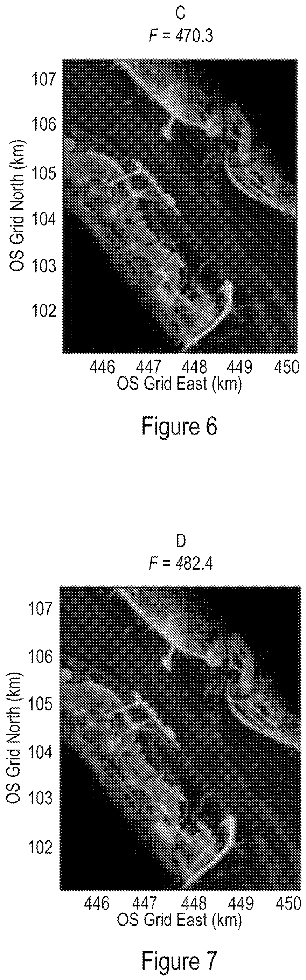

Figures 4, 5, 6 and 7 show a visual representation of the offset calibration process with four subsets of time-integrated image I (centred on Fawley oil refinery) in Cartesian UK Ordnance Survey (OS) coordinates at 5m pixel resolution. Each of the subset images (i.e. each of Figures 4, 5, 6 and 7) shows the effect of correctly determining each offset on the quality of the stabilised imagery generated from the moving vessel, both visually and with the F value of each image. Subset A (Figure 4) shows the effect of all offsets set to zero, B (Figure 5) a correct value for $\alpha$ only, C (Figure 6) a correct value of $\alpha$ and $\beta$ and D (Figure 7) correct values for all three offsets. Clearly visible in the stabilised imagery are the structures associated with the refinery (including the circular gas tanks), vessels docked at their berths and channels within the saltmarshes. An image such as this would not be possible from a static radar as only one aspect of the targets would be illuminated; as the Discovery sailed down the Solent the radar was able to illuminate different aspects of each target, rendering their shape clearly (e.g. the circular reflection patterns of the gas tanks at 104.9km N, 445.5km E )

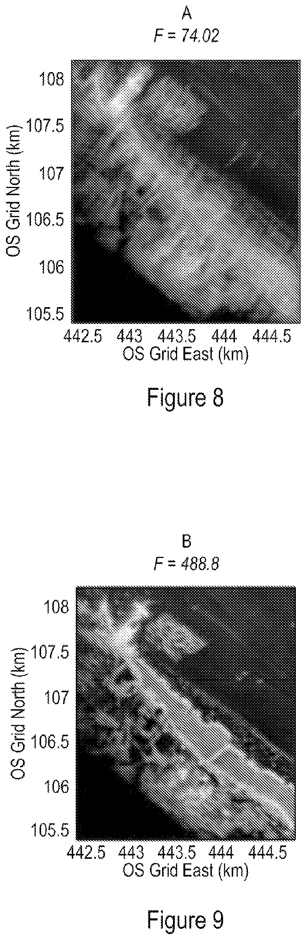

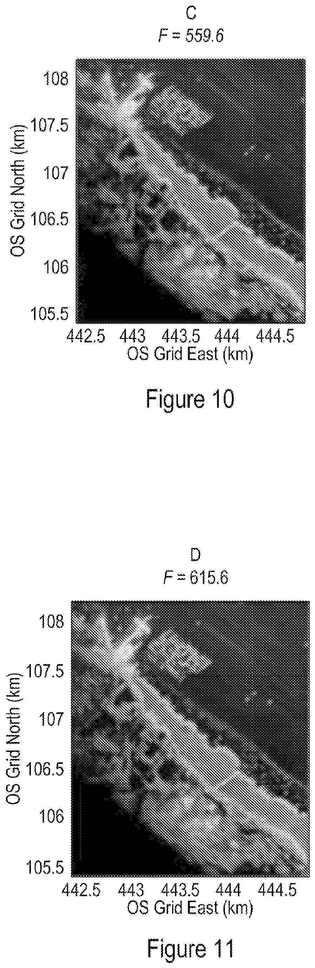

Figures 8, 9, 10 and 11 show the same image subsets as Figures 4, 5, 6 and 7, centred on the Hythe marina at 5m pixel resolution. Here the effect of each successively optimised offset can be clearly seen in the targets associated with leisure vessels moored in the marina (107.5km N, 443.5km E). The combination of a fine pixel resolution and the stability afforded by the calibration method allows the identification of not only individual boats moored in the marina but also which berths are occupied (brighter, high-magnitude echoes) and which are unoccupied but marked with a buoy (low-magnitude targets).

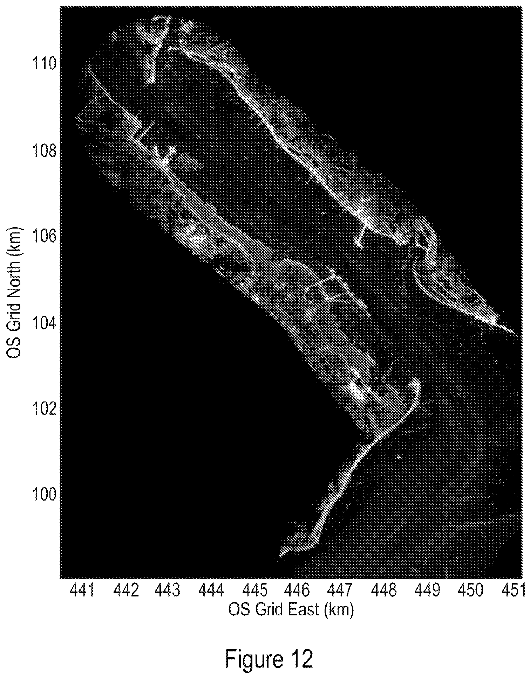

Figure 12 shows a 'synthetic aperture' time-integrated image at 5m pixel resolution created by the described calibration method, generated using data recorded by the RSS Discovery as it sailed out of Southampton down the Solent. This image serves as an example of the detail inherent in marine radar imagery; much of which is routinely discarded by plan position indicator (PPI) devices.

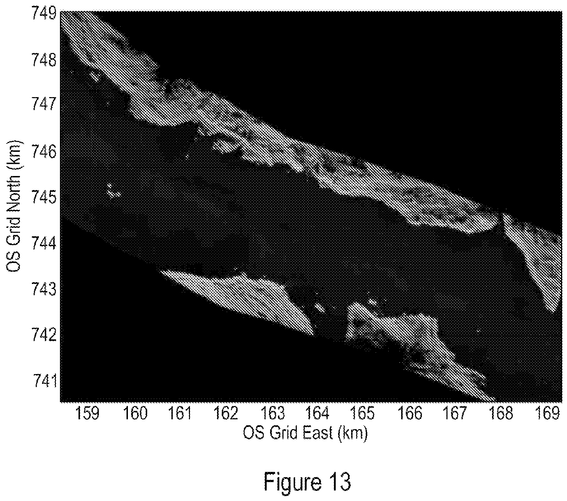

Figure 13 shows a 'synthetic aperture' time-integrated image generated from data recorded by the RSS Discovery in the Sound of Mull, Scotland. Due to the wide vertical 3dB beamwidth of the antenna (apprx. 20°) much of the vertical relief of the cliffs on either side of the Sound are illuminated, producing imagery similar to SAR or SAS imagery of mountainous terrain or bathymetry. Visible are a number of fisheries in the sound (e.g., 742.5N, 164E and 743N, 165.2E) including marker buoys and pontoon pilings as well as boundary walls around properties on the Northern shore (746.5N, 162E). The sharpness of the image at 5m pixel resolution would only be possible with accurately determined offsets.

## Discussion

Regardless of the choice of post-processing of vessel-borne marine radar imagery, the quality of any derived data products will be proportional to the accuracy of geo-registration. As the physical equipment mounting positions, effect of radar cable length and computer internal delays are not easily or readily measured the offsets that are required for accurate registration need to be derived using minimal information. The method proposed in this study requires only a sequence of suitable radar images and the associated vessel heading and position data for the time of recording.

This work has described an accurate and robust method for determining the offset parameters required to correctly geo-register vessel-based marine radar imagery. However in order to create an operational system a number of issued must be addressed.

It is apparent that there is a mild co-dependency of $\alpha$ and $\beta$ on the calculation of $F_{max}$. This dependency may be due to the form of input imagery to the algorithm combined with the programmatic method of determination of F (i.e., with $\beta$ and $\gamma$ set to zero when initially searching for $\alpha$). The co-dependency manifests an image I with a calculated highest F value but which remains slightly blurred; especially around small, static targets. A simple solution for this could be to use a first guess for $\beta$ and $\gamma$ based on prior knowledge of the system under calibration which will lead to a more accurate determination of $\alpha$.

The number and content of radar intensity images required for the algorithm to perform accurately is dependent on vessel motion and manoeuvres during image acquisition. The most useful images are those that contain between 20% and 50% land (preferably with a sharply defined land/sea boundary such as coastal defences or harbour walls) and are recorded when the vessel is in motion and turning. In this 'best-case' scenario an image set of between 512 and 1024 scans are recommended to accurately perform the described method.

Accurately geo-registered radar intensity images recorded by ship-borne radars have a number of uses aside from wave inversion of sea clutter. The SAR-type, time-integrated images that are created by the presented method utilise radar data that is not routinely recorded by vessel operators. Assuming the operator has access to GPS/INS position and heading data the only additional requirement to transform the ephemeral information presented by the radar's plan position indicator (PPI) to high resolution (~5m) maps of the coast and other static targets is the provision of accurate angular, spatial and time offsets. These high-resolution, geo-registered images could be utilised for coastal surveying, for example using the waterline method [12] for intertidal areas or wave inversion for wet areas in the presence of waves. Survey mapping is also a possibility: especially salt-marsh monitoring (e.g., Figures 4, 5, 6 and 7), with images potentially available from any vessel with suitable radar, data recording and navigational systems. The timing of such imagery would not be constrained by satellite flight paths or the frequency of repeat passes, only the presence of a suitably equipped vessel.

The invention is as defined in the appended claims.

References

[1] R. Young, W. Rosenthal and F. Ziemer, "Three-dimensional analysis of marine radar images for the determination of ocean wave directionality and surface currents," Journal of Geophysical Research, no. 90, p. 1049-1059, 1985.

[2] J. Nieto-Borge, K. Reichert and J. Dittmer, "Use of nautical radar as a wave monitoring instrument," Coast. Eng., no. 37, p. 331-342, 1999.

[3] J. Nieto-Borge and C. Gueses-Soares, "Analysis of directional wave fields using X-band navigation radar," Coast. Eng., no. 40, p. 375-391, 2000.

[4] P. Bell, "Shallow water bathymetry derived from an analysis of X-band marine radar images of waves," Coastal Engineering, no. 37, p. 513-527, 1999.

[5] P. Bell, "Coastal mapping around shore parallel breakwaters," Hydro International, vol. 13, no. 1, p. 18-21, 2009.

[6] K. Hessner, K. Reichert, J. Nieto-Borge, C. Stevens and M. Smith, "High-resolution X-band radar measurements of currents, bathymetry and sea state in highly inhomogeneous coastal areas," Ocean Dyn., no. 64, p. 989-998, 2014.

[7] P. Bell and J. Osler, "Mapping bathymetry using X-band marine radar data recorded from a moving vessel," Ocean Dyn., no. 61, p. 2141-2156, 2011.

[8] B. Lund and H. Graber, "On shipboard marine X-band radar near-surface current "calibration"," J. Atmos. Oceanic Tech., no. 32, p. 1928-1944, 2015.

[9] J. Nieto-Borge, R. Rodriguez, K. Hessner and I. Gonzales, "Inversion of marine radar images for surface wave analysis," J. Atmos. Ocean Technol., no. 21, p. 1291-1300, 2010.

[10] B. Lund, H. Graber and R. Romeiser, "Wind retrieval from shipborne nautical X-band radar data," IEEE Trans. Geosci. Remote Sens., no. 50, p. 3800-3811, 2012.

[11] T. M. Joyce, "On in situ "calibration" of shipboard ADCPs.," Journal of Atmospheric and Oceanic Technology, no. 6, p. 169-172, 1989.

[12] P. Bell, C. Bird and A. Plater, "A temporal waterline approach to mapping intertidal areas using X-band marine radar," Coast. Eng. no. 107, p. 84-101, 2016.

**Claims**

1. A method of remote sensing of a body of water comprising:

using a radar apparatus installed on a vessel to obtain a plurality of radar intensity images of the surface of the body of water;

registering the geographic location of each of the plurality of radar intensity images, wherein each of the plurality of radar intensity images is converted into a geographically-referenced image using position and heading data recorded by a navigation unit, and wherein registering the geographic location of each of the plurality of radar intensity images comprises:

applying one or more of the following principal systematic calibration offsets to increase image sharpness:

an azimuthal alignment error ($\alpha$) corresponding to an angular offset between a heading recorded by the navigation unit installed on the vessel and a true heading of the vessel;

a start range error ($\beta$) corresponding to an error in a distance from an antenna to a data processing unit of the radar apparatus for a first range bin in the plurality of radar intensity images; and/or

a system time error ($\gamma$) corresponding to a total time delay resulting from a time delay due to communication of data between the radar apparatus and the data processing unit and/or a computer-induced time stamp delay between a true image recording time and an image time-stamp;

wherein applying the principal systematic calibration offsets begins in a first pass with all three principal systematic calibration offsets initially set to equal zero and conducting a search for an optimum value of a first one of the three principal systematic calibration offsets; and

generating one or more time-integrated images of the surface of the body of water from the geographically-referenced radar intensity images.

2. The method according to claim 1 comprising applying two or three of the principal systematic calibration offsets.

3. A method according to claim 1 or claim 2, wherein the radar intensity images and/or the time-integrated images include a portion of land adjacent the body of water.

4. A method according to claim 1, claim 2 or claim 3, wherein the radar apparatus is operable to obtain x-band radar intensity images and/or wherein the navigation unit comprises a Global Navigation Satellite System, GNSS, and/or an Inertial Navigation System, INS.

5. A method according to any one of the preceding claims, wherein converting the radar intensity image(s) to the geographically-referenced image(s) is performed using a bilinear interpolation.

6. A method according to any one of the preceding claims, comprising constructing a synthetic aperture image from a number of sequential geographically-referenced radar intensity images, e.g. so that:

$$I = \left[\sum_{S=1}^{S=n} p(S_c)\right] \frac{1}{n} \qquad (1)$$

where p is the intensity of each pixel in scan $S_c$ and I is a time-integrated image of a set of n geographically-referenced radar intensity images.

7. A method according to claim 6 comprising determining the visual sharpness F of image I by the stability of static targets over the number of geographically-referenced radar intensity images and can be defined as the variance of the two-dimensional image gradient so that:

$$F = Var\left(\frac{dp(I)}{dx} + \frac{dp(I)}{dy}\right) \qquad (2)$$

8. A method according to claim 2 or any one of the claims 3 to 7 when dependent on claim 2 comprising assuming that the three principal systematic calibration offsets are not covariant and have an order of relative importance to image stability, for instance: angle $\alpha$, range $\beta$ and time $\gamma$.

9. A method according to any one of the preceding claims, wherein:

   the optimum value of the first one of the principal calibration offsets is used, with the other two of the principal systematic calibration offsets initially set to zero, in a second pass to search for an optimum value of a second one of the principal systematic calibration offsets; and optionally
   the steps are repeated in a third pass to find a third one of the principal systematic calibration offsets, using the previously-found values of the first and second principal systematic calibration offsets with the third one of the principal systematic calibration offsets initially set to zero.

10. A method according to any one of the preceding claims, wherein: $\alpha$ is at least $\pm$ 1°; and/or $\beta$ is at least 10 m; and/or $\gamma$ is at least 1 s.

11. A system for remote sensing of a body of water comprising:

   a vessel with a radar apparatus and a navigation unit installed thereon, wherein the radar apparatus is operable to obtain a plurality of radar intensity images of the surface of the body of water and the navigation unit is operable to record accurate positional and heading data; and
   a data processing unit comprising a computer configured to:

   register the geographic location of each of the plurality of radar intensity images, wherein each of the plurality of radar intensity images is converted into a geographically-referenced image using position and heading data recorded by the navigation unit and wherein registering the geographic location of each of the plurality of radar intensity images comprises:
   applying one or more of the following principal systematic calibration offsets to increase image sharpness:

   an azimuthal alignment error ($\alpha$) corresponding to an angular offset between a heading recorded by the navigation unit and a true heading of the vessel;
   a start range error ($\beta$) corresponding to an error in a distance from an antenna of the radar apparatus to the data processing unit for a first range bin in the plurality of radar intensity images; and/or
   a system time error ($\gamma$) corresponding to a total time delay resulting from a time delay due to communication of data between the radar apparatus and the data processing unit and/or a computer-induced time stamp delay between a true image recording time and an image time-stamp;
   wherein applying the principal systematic calibration offsets begins in a first pass with all three principal systematic calibration offsets initially set to equal zero and conducting a search for an optimum value of a first one of the three principal systematic calibration offsets; and

   generate one or more time-integrated images of the surface of the body of water from the geographically-referenced radar intensity images.

12. A system according to claim 11, wherein the computer is configured to perform a method of any one of claims 1 to 10.

13. A computer readable medium comprising software that, when loaded on a suitable computer, configures the computer to process a plurality of radar intensity images recorded on a data storage device so as to register the geographic location of each of the plurality of radar intensity images, wherein each of the plurality of radar intensity images is converted into a geographically-referenced image using position and heading data recorded by a navigation unit, and wherein registering the geographic location of each of the plurality of radar intensity images comprises:
applying one or more of the following principal systematic calibration offsets to increase image sharpness:

   an azimuthal alignment error ($\alpha$) corresponding to an angular offset between a heading recorded by the navigation unit and a true heading of the vessel;
   a start range error ($\beta$) corresponding to an error in a distance from an antenna of the radar apparatus to the data processing unit for a first range bin in the plurality of radar intensity images; and/or
   a system time error ($\gamma$) corresponding to a total time delay resulting from a time delay due to communication of data between the radar apparatus and the data processing unit and/or a computer-induced time stamp delay between a true image recording time and an image time-stamp;

wherein applying the principal systematic calibration offsets begins in a first pass with all three principal systematic calibration offsets initially set to equal zero and conducting a search for an optimum value of a first one of the three principal systematic calibration offsets; and

generate one or more time-integrated images of the surface of the body of water from the geographically-referenced radar intensity images.

14. A computer readable medium according to claim 13, wherein the software configures the computer to perform a method according to any one of claims 1 to 10.

**Patentansprüche**

1. Verfahren zur Fernerkundung eines Gewässers, umfassend:

Verwenden einer Radarvorrichtung, die auf einem Schiff installiert ist, um eine Mehrzahl von Radarintensitätsbildern der Oberfläche des Gewässers zu erhalten;
Registrieren des geografischen Standorts jedes der Mehrzahl von Radarintensitätsbildern, wobei jedes der Mehrzahl von Radarintensitätsbildern unter Verwendung von Positions- und Kursdaten, die von einer Navigationseinheit aufgezeichnet werden, in ein geografisch referenziertes Bild umgewandelt wird, und wobei das Registrieren des geografischen Standorts jedes der Mehrzahl von Radarintensitätsbildern Folgendes umfasst:
Anwenden eines oder mehrerer der folgenden systematischen Hauptkalibrierungsoffsets, um die Bildschärfe zu verbessern:

einen Azimutalausrichtungsfehler ($\alpha$), der einem Winkelversatz zwischen einem von der auf dem Schiff installierten Navigationseinheit aufgezeichneten Kurs und einem tatsächlichen Kurs des Schiffs entspricht;
einen Anfangsentfernungsfehler ($\beta$), der einem Fehler in einer Distanz von einer Antenne zu einer Datenverarbeitungseinheit der Radarvorrichtung für einen ersten Entfernungsbin in der Mehrzahl von Radarintensitätsbildern entspricht; und/oder
einen Systemzeitfehler ($\gamma$), der einer Gesamtzeitverzögerung entspricht, die aus einer Zeitverzögerung aufgrund der Kommunikation von Daten zwischen der Radarvorrichtung und der Datenverarbeitungseinheit und/oder einer computerbedingten Zeitstempelverzögerung zwischen einem tatsächlichen Bildaufzeichnungszeitpunkt und einem Bildzeitstempel resultiert;
wobei das Anwenden der systematischen Hauptkalibrierungsoffsets in einem ersten Durchgang beginnt, wobei alle drei systematischen Hauptkalibrierungsoffsets anfänglich gleich null gesetzt werden, und eine Suche nach einem optimalen Wert eines ersten der drei systematischen Hauptkalibrierungsoffsets durchgeführt wird; und

Erzeugen eines oder mehrerer zeitintegrierter Bilder der Oberfläche des Gewässers aus den geografisch referenzierten Radarintensitätsbildern.

2. Verfahren nach Anspruch 1, umfassend ein Anwenden zweier oder dreier der systematischen Hauptkalibrierungsoffsets.

3. Verfahren nach Anspruch 1 oder 2, wobei die Radarintensitätsbilder und/oder die zeitintegrierten Bilder einen Landabschnitt benachbart zu dem Gewässer beinhalten.

4. Verfahren nach Anspruch 1, 2 oder 3, wobei die Radarvorrichtung dazu ausgelegt ist, X-Band-Radarintensitätsbilder zu erhalten, und/oder wobei die Navigationseinheit ein globales Satellitennavigationssystem, GNSS, und/oder ein Trägheitsnavigationssystem, INS, umfasst.

5. Verfahren nach einem der vorhergehenden Ansprüche, wobei das Umwandeln der Radarintensitätsbild(er) in die geografisch referenzierten Bild(er) unter Verwendung bilinearer Interpolation erfolgt.

6. Verfahren nach einem der vorhergehenden Ansprüche, umfassend ein Erstellen eines synthetischen Aperturbildes aus einer Anzahl aufeinanderfolgender geografisch referenzierter Radarintensitätsbildern, sodass z. B.:

$$I = \left[\sum_{S=1}^{S=n} p(S_c)\right]\frac{1}{n} \qquad (1)$$

wobei p die Intensität jedes Pixels im Scan $S_c$ ist und I ein zeitintegriertes Bild eines Satzes von n geografisch referenzierten Radarintensitätsbildern ist.

7. Verfahren nach Anspruch 6, umfassend, dass die visuelle Schärfe F des Bildes I durch die Stabilität statischer Ziele über die Anzahl geographisch referenzierter Radarintensitätsbilder bestimmt wird und als Varianz des zweidimensionalen Bildgradienten definiert werden kann, sodass:

$$F = Var\left(\frac{dp(I)}{dx} + \frac{dp(I)}{dy}\right) \qquad (2)$$

8. Verfahren nach Anspruch 2 oder einem der Ansprüche 3 bis 7, wenn abhängig von Anspruch 2, umfassend ein Annehmen, dass die drei systematischen Hauptkalibrierungsoffsets nicht kovariant sind und eine Reihenfolge relativer Bedeutung für die Bildstabilität aufweisen, zum Beispiel: Winkel $\alpha$, Entfernung $\beta$ und Zeit $\gamma$.

9. Verfahren nach einem der vorhergehenden Ansprüche, wobei:

der optimale Wert des ersten der Hauptkalibrierungsoffsets in einem zweiten Durchgang verwendet wird, um nach einem optimalen Wert eines zweiten der systematischen Hauptkalibrierungsoffsets zu suchen, wobei die anderen beiden systematischen Hauptkalibrierungsoffsets anfänglich auf null gesetzt werden; und optional die Schritte in einem dritten Durchgang wiederholt werden, um einen dritten der systematischen Hauptkalibrierungsoffsets zu finden, wobei die zuvor gefundenen Werte des ersten und des zweiten systematischen Hauptkalibrierungsoffsets verwendet werden, wobei der dritte der systematischen Hauptkalibrierungsoffsets anfänglich auf null gesetzt wird.

10. Verfahren nach einem der vorhergehenden Ansprüche, wobei: $\alpha$ mindestens $\pm 1°$ beträgt; und/oder $\beta$ mindestens 10 m beträgt; und/oder $\gamma$ mindestens 1 s beträgt.

11. System zur Fernerkundung eines Gewässers, umfassend:

ein Schiff mit einer Radarvorrichtung und einer darauf installierten Navigationseinheit, wobei die Radarvorrichtung dazu ausgelegt ist, eine Mehrzahl von Radarintensitätsbildern der Oberfläche des Gewässers zu erhalten und die Navigationseinheit dazu ausgelegt ist, genaue Positions- und Kursdaten aufzuzeichnen; und eine Datenverarbeitungseinheit, die einen Computer umfasst, der zu Folgendem konfiguriert ist:

Registrieren des geografischen Standorts jedes der Mehrzahl von Radarintensitätsbildern, wobei jedes der Mehrzahl von Radarintensitätsbildern unter Verwendung von Positions- und Kursdaten, die von der Navigationseinheit aufgezeichnet werden, in ein geografisch referenziertes Bild umgewandelt wird, und wobei das Registrieren des geografischen Standorts jedes der Mehrzahl von Radarintensitätsbildern Folgendes umfasst:
Anwenden eines oder mehrerer der folgenden systematischen Hauptkalibrierungsoffsets, um die Bildschärfe zu verbessern:

einen Azimutalausrichtungsfehler ($\alpha$), der einem Winkelversatz zwischen einem von der Navigationseinheit aufgezeichneten Kurs und einem tatsächlichen Kurs des Schiffs entspricht;
einen Anfangsentfernungsfehler ($\beta$), der einem Fehler in einer Distanz von einer Antenne der Radarvorrichtung zu der Datenverarbeitungseinheit für einen ersten Entfernungsbin in der Mehrzahl von Radarintensitätsbildern entspricht; und/oder
einen Systemzeitfehler ($\gamma$), der einer Gesamtzeitverzögerung entspricht, die aus einer Zeitverzögerung aufgrund der Kommunikation von Daten zwischen der Radarvorrichtung und der Datenverarbeitungseinheit und/oder einer computerbedingten Zeitstempelverzögerung zwischen einem tatsächlichen Bildaufzeichnungszeitpunkt und einem Bildzeitstempel resultiert;
wobei das Anwenden der systematischen Hauptkalibrierungsoffsets in einem ersten Durchgang beginnt, wobei alle drei systematischen Hauptkalibrierungsoffsets anfänglich gleich null gesetzt werden, und eine Suche nach einem optimalen Wert eines ersten der drei systematischen Hauptkalibrierungsoffsets durchgeführt wird; und

Erzeugen eines oder mehrerer zeitintegrierter Bilder der Oberfläche des Gewässers aus den geografisch referenzierten Radarintensitätsbildern.

12. System nach Anspruch 11, wobei das System zum Durchführen eines Verfahrens nach einem der Ansprüche 1 bis 10 konfiguriert ist.

13. Computerlesbares Medium, umfassend Software, die, wenn sie auf einen geeigneten Computer geladen wird, den Computer dazu konfiguriert, eine Mehrzahl von Radarintensitätsbildern zu verarbeiten, die auf einer Datenspeichereinrichtung aufgezeichnet sind, um den geografischen Standort jedes der Mehrzahl von Radarintensitätsbildern zu registrieren, wobei jedes der Mehrzahl von Radarintensitätsbildern unter Verwendung von Positions- und Kursdaten, die von einer Navigationseinheit aufgezeichnet werden, in ein geografisch referenziertes Bild umgewandelt wird, und wobei das Registrieren des geografischen Standorts jedes der Mehrzahl von Radarintensitätsbildern Folgendes umfasst:
Anwenden eines oder mehrerer der folgenden systematischen Hauptkalibrierungsoffsets, um die Bildschärfe zu verbessern:

einen Azimutalausrichtungsfehler ($\alpha$), der einem Winkelversatz zwischen einem von der Navigationseinheit aufgezeichneten Kurs und einem tatsächlichen Kurs des Schiffs entspricht;
einen Anfangsentfernungsfehler ($\beta$), der einem Fehler in einer Distanz von einer Antenne der Radarvorrichtung zu der Datenverarbeitungseinheit für einen ersten Entfernungsbin in der Mehrzahl von Radarintensitätsbildern entspricht; und/oder
einen Systemzeitfehler ($\gamma$), der einer Gesamtzeitverzögerung entspricht, die aus einer Zeitverzögerung aufgrund der Kommunikation von Daten zwischen der Radarvorrichtung und der Datenverarbeitungseinheit und/oder einer computerbedingten Zeitstempelverzögerung zwischen einem tatsächlichen Bildaufzeichnungszeitpunkt und einem Bildzeitstempel resultiert;
wobei das Anwenden der systematischen Hauptkalibrierungsoffsets in einem ersten Durchgang beginnt, wobei alle drei systematischen Hauptkalibrierungsoffsets anfänglich gleich null gesetzt werden, und eine Suche nach einem optimalen Wert eines ersten der drei systematischen Hauptkalibrierungsoffsets durchgeführt wird; und
Erzeugen eines oder mehrerer zeitintegrierter Bilder der Oberfläche des Gewässers aus den geografisch referenzierten Radarintensitätsbildern.

14. Computerlesbares Medium nach Anspruch 13, wobei die Software den Computer zum Durchführen eines Verfahrens nach einem der Ansprüche 1 bis 10 konfiguriert.

**Revendications**

1. Procédé de détection à distance d'une masse d'eau comprenant :

l'utilisation d'un appareil radar installé sur un navire pour obtenir une pluralité d'images d'intensité radar de la surface de la masse d'eau ;
le repérage de l'emplacement géographique de chaque image de la pluralité d'images d'intensité radar, chaque image de la pluralité d'images d'intensité radar étant convertie en une image géoréférencée au moyen de données de position et de cap enregistrées par une unité de navigation, et le repérage de l'emplacement géographique de chaque image de la pluralité d'images d'intensité radar comprenant :
l'application d'un ou plusieurs des principaux écarts d'étalonnage systématiques suivants pour augmenter la netteté de l'image :

une erreur d'alignement azimutal (a) correspondant à un écart angulaire entre un cap enregistré par l'unité de navigation installée sur le navire et un cap réel du navire ;
une erreur de portée de départ (b) correspondant à une erreur de distance entre une antenne et une unité de traitement de données de l'appareil radar pour un premier intervalle de portée dans la pluralité d'images d'intensité radar ; et/ou
une erreur de temps système (g) correspondant à un retard total résultant d'un retard dû à la communication de données entre l'appareil radar et l'unité de traitement de données et/ou un retard d'horodatage induit par ordinateur entre un temps réel d'enregistrement d'image et un horodatage d'image ;

l'application des principaux écarts d'étalonnage systématiques commençant par une première passe avec l'ensemble des trois principaux écarts d'étalonnage systématiques initialement réglés pour valoir zéro et la réalisation d'une recherche pour une valeur optimale d'un premier des trois principaux écarts d'étalonnage systématiques ; et

la génération d'une ou plusieurs images intégrées dans le temps de la surface de la masse d'eau à partir des images d'intensité radar géoréférencées.

2. Procédé selon la revendication 1 comprenant l'application de deux ou trois des principaux écarts d'étalonnage systématiques.

3. Procédé selon la revendication 1 ou la revendication 2, dans lequel les images d'intensité radar et/ou les images intégrées dans le temps comportent une partie de terre adjacente à la masse d'eau.

4. Procédé selon la revendication 1, la revendication 2 ou la revendication 3, dans lequel l'appareil radar est utilisable pour obtenir des images d'intensité radar dans la bande x et/ou dans lequel l'unité de navigation comprend un système global de navigation par satellite, GNSS, et/ou un système de navigation inertielle, INS.

5. Procédé selon l'une quelconque des revendications précédentes, dans lequel la conversion de la/des image(s) d'intensité radar en la/les image(s) géoréférencée(s) est effectuée au moyen d'une interpolation bilinéaire.

6. Procédé selon l'une quelconque des revendications précédentes, comprenant la construction d'une image en synthèse d'ouverture à partir d'un nombre d'images d'intensité radar géoréférencées successives, par ex. de telle sorte que :

$$I = \left[\sum_{S=1}^{S=2} p(S_c)\right] \frac{1}{n}$$

(1)

où $p$ est l'intensité de chaque pixel dans un balayage $S_c$ et $I$ est une image intégrée dans le temps d'un ensemble de $n$ images d'intensité radar géoréférencées.

7. Procédé selon la revendication 6 comprenant le fait que la netteté visuelle $F$ d'une image $I$ est déterminée par la stabilité de cibles statiques sur le nombre d'images d'intensité radar géoréférencées et peut être définie comme la variance du gradient d'image bidimensionnel de telle sorte que :

$$F = Var\left(\frac{dp(I)}{dx} + \frac{dp(I)}{dy}\right)$$

(2)

8. Procédé selon la revendication 2 ou l'une quelconque des revendications 3 à 7 lorsqu'elles sont dépendantes de la revendication 2 comprenant l'hypothèse que les trois principaux écarts d'étalonnage systématiques ne sont pas covariants et ont un ordre d'importance relative pour la stabilité de l'image, par exemple : angle a, angle b et temps g.

9. Procédé selon l'une quelconque des revendications précédentes, dans lequel :

la valeur optimale du premier des principaux écarts d'étalonnage est utilisée, avec les deux autres des principaux écarts d'étalonnage systématiques initialement réglés à zéro, dans une deuxième passe pour la recherche d'une valeur optimale d'un deuxième des principaux écarts d'étalonnage systématiques ; et, éventuellement, les étapes sont répétées dans une troisième passe pour trouver un troisième des principaux écarts d'étalonnage systématiques, au moyen des valeurs préalablement trouvées des premier et deuxième principaux écarts d'étalonnage systématiques avec le troisième des principaux écarts d'étalonnage systématiques initialement réglé à zéro.

**10.** Procédé selon l'une quelconque des revendications précédentes, dans lequel : a vaut au moins ± 1° ; et/ou b vaut au moins 10 m ; et/ou g vaut au moins 1 s.

**11.** Système pour la détection à distance d'une masse d'eau comprenant :

un navire avec un appareil radar et une unité de navigation installés sur celui-ci, l'appareil radar étant utilisable pour obtenir une pluralité d'images d'intensité radar de la surface de la masse d'eau et l'unité de navigation étant utilisable pour enregistrer des données de position et de cap précises ; et
une unité de traitement de données comprenant un ordinateur configuré pour :

repérer l'emplacement géographique de chaque image de la pluralité d'images d'intensité radar, chaque image de la pluralité d'images d'intensité radar étant convertie en une image géoréférencée au moyen de données de position et de cap enregistrées par l'unité de navigation, et le repérage de l'emplacement géographique de chaque image de la pluralité d'images d'intensité radar comprenant :
l'application d'un ou plusieurs des principaux écarts d'étalonnage systématiques suivants pour augmenter la netteté de l'image :

une erreur d'alignement azimutal (a) correspondant à un écart angulaire entre un cap enregistré par l'unité de navigation et un cap réel du navire ;
une erreur de portée de départ (b) correspondant à une erreur de distance entre une antenne de l'appareil radar et l'unité de traitement de données pour un premier intervalle de portée dans la pluralité d'images d'intensité radar ; et/ou
une erreur de temps système (g) correspondant à un retard total résultant d'un retard dû à la communication de données entre l'appareil radar et l'unité de traitement de données et/ou un retard d'horodatage induit par ordinateur entre un temps réel d'enregistrement d'image et un horodatage d'image ;
l'application des principaux écarts d'étalonnage systématiques commençant par une première passe avec l'ensemble des trois principaux écarts d'étalonnage systématiques initialement réglés pour valoir zéro et la réalisation d'une recherche pour une valeur optimale d'un premier des trois principaux écarts d'étalonnage systématiques ; et

générer une ou plusieurs images intégrées dans le temps de la surface de la masse d'eau à partir des images d'intensité radar géoréférencées.

**12.** Système selon la revendication 11, dans lequel l'ordinateur est configuré pour effectuer un procédé de l'une quelconque des revendications 1 à 10.

**13.** Support lisible par ordinateur comprenant un logiciel qui, une fois chargé sur un ordinateur approprié, configure l'ordinateur pour qu'il traite une pluralité d'images d'intensité radar enregistrées sur un dispositif de stockage de données de manière à repérer l'emplacement géographique de chaque image de la pluralité d'images d'intensité radar, chaque image de la pluralité d'images d'intensité radar étant convertie en une image géoréférencée au moyen de données de position et de cap enregistrées par une unité de navigation, et le repérage de l'emplacement géographique de chaque image de la pluralité d'images d'intensité radar comprenant :
l'application d'un ou plusieurs des principaux écarts d'étalonnage systématiques suivants pour augmenter la netteté de l'image :

une erreur d'alignement azimutal (a) correspondant à un écart angulaire entre un cap enregistré par l'unité de navigation et un cap réel du navire ;
une erreur de portée de départ (b) correspondant à une erreur de distance entre une antenne de l'appareil radar et l'unité de traitement de données pour un premier intervalle de portée dans la pluralité d'images d'intensité radar ; et/ou
une erreur de temps système (g) correspondant à un retard total résultant d'un retard dû à la communication de données entre l'appareil radar et l'unité de traitement de données et/ou un retard d'horodatage induit par ordinateur entre un temps réel d'enregistrement d'image et un horodatage d'image ;
l'application des principaux écarts d'étalonnage systématiques commençant par une première passe avec l'ensemble des trois principaux écarts d'étalonnage systématiques initialement réglés pour valoir zéro et la réalisation d'une recherche pour une valeur optimale d'un premier des trois principaux écarts d'étalonnage systématiques ; et

qu'il génère une ou plusieurs images intégrées dans le temps de la surface de la masse d'eau à partir des images d'intensité radar géoréférencées.

14. Support lisible par ordinateur selon la revendication 13, dans lequel le logiciel configure l'ordinateur pour qu'il effectue un procédé selon l'une quelconque des revendications 1 à 10.

Figure 1

Figure 2

Figure 3

A

*F = 52.90*

Figure 4

B

*F = 410.8*

Figure 5

C

$F = 470.3$

Figure 6

D

$F = 482.4$

Figure 7

A
F = 74.02

Figure 8

B
F = 488.8

Figure 9

C
$F = 559.6$

Figure 10

D
$F = 615.6$

Figure 11

Figure 12

Figure 13

## REFERENCES CITED IN THE DESCRIPTION

**Patent documents cited in the description**

- US 2004257264 A
- US 2016349363 A
- US 2012020527 A
- US 2017176586 A

**Non-patent literature cited in the description**

- **R. YOUNG** ; **W. ROSENTHAL** ; **F. ZIEMER**. Three-dimensional analysis of marine radar images for the determination of ocean wave directionality and surface currents. *Journal of Geophysical Research*, 1985, vol. 90, 1049-1059
- **J. NIETO-BORGE** ; **K. REICHERT** ; **J. DITTMER**. Use of nautical radar as a wave monitoring instrument. *Coast. Eng.*, 1999, vol. 37, 331-342
- **J. NIETO-BORGE** ; **C. GUESES-SOARES**. Analysis of directional wave fields using X-band navigation radar. *Coast. Eng.*, 2000, vol. 40, 375-391
- **P. BELL**. Shallow water bathymetry derived from an analysis of X-band marine radar images of waves. *Coastal Engineering*, 1999, vol. 37, 513-527
- **P. BELL**. Coastal mapping around shore parallel breakwaters. *Hydro International*, 2009, vol. 13 (1), 18-21
- **K. HESSNER** ; **K. REICHERT** ; **J. NIETO-BORGE** ; **C. STEVENS** ; **M. SMITH**. High-resolution X-band radar measurements of currents, bathymetry and sea state in highly inhomogeneous coastal areas. *Ocean Dyn*, 2014, vol. 64, 989-998
- **P. BELL** ; **J. OSLER**. Mapping bathymetry using X-band marine radar data recorded from a moving vessel. *Ocean Dyn.*, 2011, vol. 61, 2141-2156
- **B. LUND** ; **H. GRABER**. On shipboard marine X-band radar near-surface current "calibration. *J. Atmos. Oceanic Tech.*, 2015, vol. 32, 1928-1944
- **J. NIETO-BORGE** ; **R. RODRIGUEZ** ; **K. HESSNER** ; **I. GONZALES**. Inversion of marine radar images for surface wave analysis. *J. Atmos. Ocean Technol*, 2010, vol. 21, 1291-1300
- **B. LUND** ; **H. GRABER** ; **R. ROMEISER**. Wind retrieval from shipborne nautical X-band radar data. *IEEE Trans. Geosci. Remote Sens.*, 2012, vol. 50, 3800-3811
- **T. M. JOYCE**. On in situ "calibration" of shipboard ADCPs.. *Journal of Atmospheric and Oceanic Technology*, 1989, vol. 6, 169-172
- **P. BELL** ; **C. BIRD** ; **A. PLATER**. A temporal waterline approach to mapping intertidal areas using X-band marine radar. *Coast. Eng.*, 2016, vol. 107, 84-101